# EUROPEAN PATENT SPECIFICATION

(11) **EP 2 574 232 B1**
(45) Date of publication and mention of the grant of the patent: **21.10.2015**
(21) Application number: 12001698.5
(22) Date of filing: 13.03.2012
(51) Int. Cl.: A01G 1/08

(54) **Modular enclosure**
Modulare Einfassung
Enceinte modulaire

(30) Priority: 27.09.2011 AU 2011226895
(43) Date of publication of application: 03.04.2013
(73) Proprietor: Scholtes Family Holding Pty Ltd, Acacia Ridge QLD 4110 (AU)
(72) Inventor: Forno, Kevin, Acacia Ridge Queensland 4110 (AU)
(74) Representative: Mergel, Volker

(56) References cited:
- WO-A1-99/07204
- DE-U1- 29 616 456
- FR-A- 1 311 988
- US-A- 2 745 638
- US-A- 5 769 562
- US-A- 5 901 526
- US-A1- 2005 144 859
- US-B1- 7 303 358

## Description

### Field of the Invention.

The present invention relates to enclosures and particularly enclosures suitable for use as raised garden beds and the like.

### Background Art.

Enclosures of many types are conventionally available. In the context of the present invention which will normally be used on a domestic basis and outside a building, an enclosure can be used as a garden bed or pen for animals. The enclosure could be used indoors in certain situations.

In this context, enclosures of this type are typically assembled or erected by the home owner who normally has little experience and quite often does not have access to expensive tools for assembly. Still further, whilst there may be a variety of enclosures available that can be used for these purposes, they are generally difficult to assembly, require more than one person to assemble or require the use of fasteners or tools.

One type of enclosure is disclosed in United States Patent number 7303358. This enclosure includes a plurality of support posts spaced from one another with each support post having at least one engagement section defining an elongate channel. At least one wall is provided that is substantially impervious to liquid and is supported to extend between a pair of support posts. Each of the walls is formed with a pair of opposed engagement slots which slightly engage with respective flanges on the support posts.

An alternative type of enclosure is disclosed in United States Patent number 5901526. This document discloses a landscape timber connecting system. A number of brackets are provided that are shaped to engage in the end of a piece of landscape timber and which also includes the ability to hinge to adjust the angle provided between the landscape timbers.

Another type of enclosure is known from US2005/0144859 A1 wherein a modular pet enclosure is disclosed.

It will be clearly understood that, if a prior art publication is referred to herein, this reference does not constitute an admission that the publication forms part of the common general knowledge in the art in Australia or in any other country.

### Summary of the Invention.

The present invention is directed to an enclosure and method of forming same, which may at least partially overcome at least one of the abovementioned disadvantages or provide the consumer with a useful or commercial choice.

Therefore, it is an object of the invention to provide an enclosure that was robust enough for use outside and in taxing circumstances as well as being simple to construct, with a small number of components and without the need for tools, fasteners or expertise.

With the foregoing in view, the present invention in one form, resides broadly in an enclosure including at least one elongate, substantially planar wall member and at least one post member having at least one edge channel, each at least one wall member having an edge which fits into at least one edge channel, the edge of the wall member having a plurality of spaced apart projections which extend from each side of the wall member, the edge channel having a pair of spaced apart, substantially parallel flanges between which the edge of a wall member is received and an abutment shoulder on at least one of the substantially parallel flanges in order to engage the projections on the wall member to allow passage thereof in a first direction but prevent passage in a second, opposite direction.

The first direction will typically be orthogonal to the height of the post as will the second direction. The wall member and post can also be moved relative to one another in both directions parallel to the height of the post, by sliding.

The enclosure of the present invention can be easily and economically mass produced, packaged and distributed. The preferred embodiment typically includes only two (or three if an end cap is included) different components that can be easily assembled or disassembled, without the need for tools, fasteners or a high level of expertise.

The enclosure of the present invention will preferably be modular. It is particularly preferred that the enclosure could be capable of packaging in what has come to be known as a "flat pack" with assembly by the user required.

Although the components of the present invention can typically be assembled by sliding the wall member relative to the edge channel, and/or a snapfit assembly with both physical and audible feedback of the engagement.

Generally, the wall members will run between spaced apart posts. The wall members may overlap with one another but this will typically be limited to a vertical overlap rather than a horizontal overlap in order to eliminate the use of fasteners between wall members.

The components of the present invention allow formation of a variety of different shapes for example rectangular, triangular or an enclosure having more than four sides. The enclosure may also be circular with one wall member and one post being provided.

The enclosure of the present invention is not intended to be limited by the use to which it is put. Generally, the enclosure of the present invention is for use in an outside environment such as for storage, as a garden bed, pet enclosure or the like but could be used inside in certain situations.

The wall members of the enclosure of the present invention are not required to be of the same dimension. For example, the height of some of the wall panels may be greater than that of others in order to offer shade, function as a windbreak or to provide privacy in a particular direction.

The enclosure of the present invention may be sold with accessories (or the accessories may be sold separately and simply used with the enclosure). Accessories can be used to attach to wall panels or to posts in order to support shade cloth, workbenches, or for tool storage or the like as examples only.

More than one enclosure can be used together. The enclosures may simply be placed to abut one another but more than one enclosure can also be connected together. For example, one or more post members can be used to attach a wall member defining one enclosure and one or more additional walls to define part of a second (or more) enclosure. In this way, multiple enclosures can be formed together increasing the stability and functionality of all enclosures.

The height of any one or more enclosure can be increased by placing one enclosure on top of another. Post members of greater height can be used in order to form an increased height enclosure or alternatively post members may be offset over the height of the enclosure. In this embodiment, the wall members may be partially overlapped vertically.

The enclosure of the present invention includes at least one elongate, substantially planar wall member. Each at least one wall member preferably has an end edge which is received into at least one edge channel on the at least one post member. The end edge of the wall member preferably has a plurality of spaced apart projections which extend from at least one, and typically each, side of the wall member.

The wall members may be panel members. Typically, the wall members are substantially planar. The term "substantially planar" does not require that the wall members be flat and includes corrugated wall members which typically provide enhanced strength.

The wall members or panel members will typically be generally rectangular with a pair of end edges and a top and bottom edge. Typically, the end edges will be at least partially received into the edge channel in the post member.

The panel member can be a continuous panel member such as a steel sheet. The steel sheet is usually profiled or corrugated to provide strength and rigidity. The steel sheet can be treated to prevent corrosion and can be painted, profiled, and the like. Any profile may be used. Typically, the wall members will be either roll formed or extruded.

Other materials may be used to form the wall panels such as aluminium, plastic, fibreglass or timber as examples.

The panel can comprise a non-continuous panel and this could include wire grid panels, panels with openings in them, or perforated panels.

The panel can comprise one or more sheets and can include double thickness panels, triple thickness panels, strengthened panels, and the like.

Panels can have varying sizes and shapes and vary in thickness and profile depending on the use of the panel.

The edges of the wall panels will preferably have a safety edge provided. Typically, the safety edge will be provided to the top and bottom edges. The end edges are normally received into the edge channel, and therefore, a safety edge is not normally provided on these edges. Forming a safety edge typically involves folding of the edge of the wall panel back on itself to leave an arcuate fold exposed.

For an edge of the panel member where it is desired to attach an edge channel, there is provided a plurality of spaced apart projections. As mentioned above, this will typically be on or adjacent the end edges of the wall panel although, capping may be provided on the top and/or bottom edges and therefore, these edges may also include a plurality of spaced apart projections.

In one form, these projections comprise lugs which can be punched out from the panel member. Other types of projections are also envisaged but punched out lugs at this stage are considered to be the most convenient and cost-effective way to form the projections.

The projections are spaced apart and the distance between projections, the size of the projections, the shape of the projections, can be varied to suit the type of attachment required. That is, if the attachment is meant to be very secure, more projections than usual can be used.

Alternatively, the size of the projections can be increased to provide a better locking action.

It is preferred that projections extend from each side of the panel member such that the panel member can lock to each side of the edge channel which can provide a more secure locking action.

To improve the locking strength between the edge channel and the panel member, it is preferred that the plurality of spaced apart projections on the panel member are spaced somewhat from the edge of the panel member. That is, the more metal there is between the projection and the edge of the panel member, the lower will be the chance of the projections becoming torn away.

The enclosure of the present invention also includes at least one post member having at least one each channel. Each edge channel has a pair of spaced apart, substantially parallel flanges between which the edge of a wall member is received and an abutment shoulder on at least one of the substantially parallel flanges in order to engage the projections on the wall member to allow passage thereof in a first direction but prevent passage in a second, opposite direction.

It can clearly be seen that the wall member can be slidingly engaged with the edge channel and/or a snapfit engagement could be used.

The post member of the present invention is typically elongate with a constant cross-section over its length/height. An extrusion process is preferred for forming the post member.

The post member can be formed from any material including metal, but a plastic, particularly an impact modified, UV stabilised plastic is preferred. A particularly preferred plastic is unplasticised polyvinylchloride (uPVC) also known as rigid PVC.

The post member may be provided with an end cap and/or a foot. Where provided, the end cap or foot will preferably be a push fit component with a portion adapted to be received in the or each edge channel in order to retain the end cap or foot relative to the post. The end cap or foot will preferably be manufactured from plastic. A friction or interference fit is preferred in order to allow for the end cap or foot to be removed relatively easily from the post member.

Typically, each post member will include at least a pair of edge channels. The edge channels may be at any angle relative to one another with the angle between the edge channels chosen in order to provide walls or partitions at particular angles relative to one another to form the enclosure or partitions within the enclosure. For example, a post may be provided with three edge channels approximately 60° apart, four each channels approximately 90° apart, three edge channels 90° apart, two edge channels 180° apart, two each channels 150° apart, two edge channels 120° apart or two edge channels at 90° apart.

A typical channel shape is one which is substantially U-shaped having a pair of spaced apart substantially parallel side flanges and a connecting member (this can be a bottom wall or top wall or edge wall depending on how the channel is used).

The channel length, cross-section size and thickness can vary to suit and the channel can also be coated or otherwise treated to prevent corrosion (dependent on material used) or provide a decorative appearance. The channel can be provided with drainage slots or apertures, if desired.

The ends of the side flanges may be tapered in order to guide the wall or panel member thereinto.

The edge channel has at least one abutment shoulder against which the projections on the panel member can lock. The at least one abutment shoulder can comprise a return lip on the periphery of at least one and preferably both of the side walls of the edge channel. The return lip can be readily roll-formed or otherwise formed into the edge channel.

It is possible for the edge channel to contain a separate projection which can be attached by spot-welding, adhesives or fasteners. This separate projection can be installed at the factory, if desired.

To provide a secure locking action, the abutment shoulder may be or include a projection on each side wall of the edge channel such that the panel member can be locked against both side walls of the edge channel.

The projection in the edge channel will need to be correspondingly positioned to allow it to engage with the projections on the panel member. For this reason, it is preferred that the projections on the edge channel are adjacent the outer most portion of the edge channel which in turn allows the projections on the panel member to be somewhat spaced from the edge of the panel member.

Alternatively, the edge channel may have a receiving opening on each side wall of edge channel such that the projections or protrusions of the wall panel can be at least partially received therein.

In a particular form, the receiving opening may be substantially U-shaped and extend perpendicularly to be playing of the wall member. In this configuration, one wall of the U-shaped receiving opening will typically form the abutment shoulder. Movement of the wall panel laterally into the opening between the flanges is possible with some small temporary deformation of either the projections on the wall member or the flanges of the edge channel required to allow the projections to pass. Once the projections are aligned with the receiving openings, the deformation typically ceases allowing the natural bias of the materials used to prevent removal of the projections from the receiving openings in a lateral direction.

The wall panel can be removed from the post member by sliding the wall panel or the post upwardly or downwardly relative to one another.

Stop means may also be provided within the edge channel in order to prevent insertion of the wall member into the edge channel too far.

In order to allow the edge channel and the panel member to push-lock together, it is preferred that the edge channel has a degree of resiliency to allow it to expand somewhat to accommodate the projections.

Alternatively, the projections can have a degree of resiliency and it is envisaged that in a further alternative both the edge channel and the panel member can be resilient to some extent.

The wall member can be inserted into the edge channel in any direction, for example horizontally, vertically or at an angle thereto with one end of the post engaging the wall member initially and working towards the other end.

The enclosure of the present invention can also include one or more partitions. In general, partitions are simply wall members which extend within the enclosure between one or more of the side walls and any other side wall or another point within the enclosure.

Typically, partitions and their location are defined by one or more posts. Any number of partitions and any configuration of partitions that may be useful can be created. Using different combinations of posts can form different shapes not only of the enclosure itself, but also the partitions within an enclosure.

Using the posts described above, it is clear that one or more partitioning walls can be provided within an enclosure to divide the volume of the enclosure into different segregated areas. For example, a post may be provided with three edge channels approximately 60° apart, for each channels approximately 90° apart, three edge channels 90° apart, to edge channels 180° apart, to each channels 150° apart, to edge channels 120° apart or to edge channels at 90° apart. These allow partitioning wall members to be provided within the enclosure.

Any of the features described herein can be combined in any combination with any one or more of the other features described herein within the scope of the invention.

### Brief Description of the Drawings.

Various embodiments of the invention will be described with reference to the following drawings, in which:
Figure 1 is a schematic sectional view showing a method of attachment of a wall panel to a 120° post according to a preferred embodiment of the present invention.
Figure 2 is a sectional view of a preferred post according to a preferred embodiment of the present invention.
Figure 3 is an end view of a wall panel used to form an enclosure according to a preferred embodiment of the present invention.
Figure 3A is a detail view of one end of the panel illustrated in Figure 3.
Figure 4 is a detail view of a portion of overlap between two wall panels as illustrated in Figure 3.
Figure 5A is a sectional view of a 90° "T" post of a preferred embodiment.
Figure 5B is a sectional view of a 90° post of a preferred embodiment.
Figure 5C is a sectional view of a 120° "T" post of a preferred embodiment.
Figure 5D is a sectional view of a 120° post of a preferred embodiment.
Figure 5E is a sectional view of a 180° post of a first preferred embodiment.
Figure 5F is a sectional view of a 180° post of a second preferred embodiment.
Figures 6A to 6H are schematic plan views of a variety of shapes of enclosures which can be formed utilising the present invention.
Figures 7A to 7D are schematic plan views of a variety of configurations of dividing walls which can be used with the enclosure of the present invention.
Figure 8 is an illustration of a variety of different cross-sectional shapes for posts which could find use in the present invention.
Figure 9 is an illustration of a variety of different sizes of enclosures which could be formed simply, using the present invention with representative sizes.

### Detailed Description of the Preferred Embodiment.

According to a particularly preferred embodiment of the present invention, an enclosure 10 is provided.

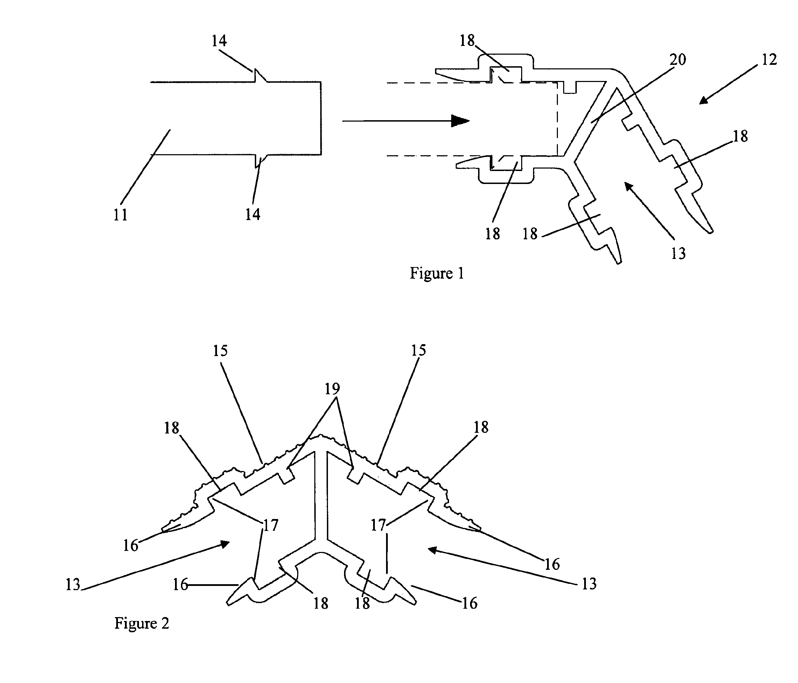

The enclosure 10 of the preferred embodiment is formed from a number of elongate, substantially planar wall members 11 and a number of post members 12, each having at least two edge channels 13 into which an edge of a wall member 11 can be inserted and retained by a snap fit engagement, a particularly preferred embodiment of which is illustrated in Figure 1.

Each of the wall members 11 has a pair of end edges (only one edge illustrated in Figure 1) which fits into an edge channel 13, with the end edges of the wall member 11 having a plurality of projections 14 spaced over the height of the wall 11 and which extend from each side of the wall member 11.

The edge channel 13 is defined by a pair of spaced apart, substantially parallel flanges 15 between which the edge of a wall member 11 is received. An abutment shoulder 17 is provided on each of the substantially parallel flanges 15 in order to engage the projections 14 on the wall member 11 to allow passage thereof in a first direction but prevent passage in a second, opposite direction.

The first direction will typically be orthogonal to the height of the post as will the second direction. The wall member and post can also be moved relative to one another in both directions parallel to the height of the post, by sliding.

The enclosure 10 of the present invention can be easily and economically mass produced, packaged and distributed.

Generally, the wall members will run between spaced apart posts.

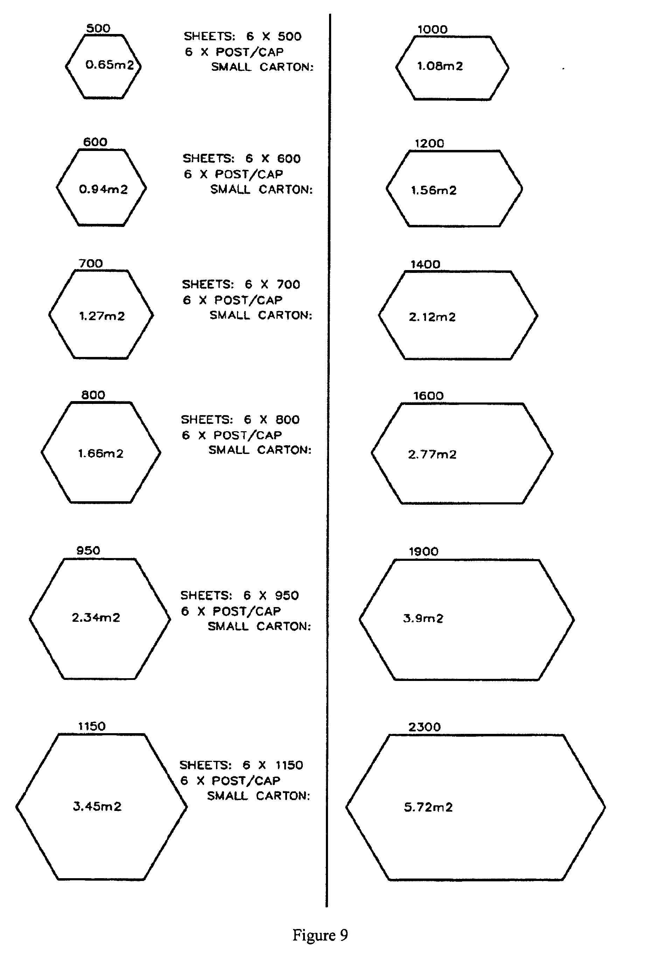

Although the components of the present invention allow formation of a variety of different shapes for example rectangular, triangular or an enclosure having more than four sides, a hexagonal enclosure as illustrated in Figure 9 is preferred.

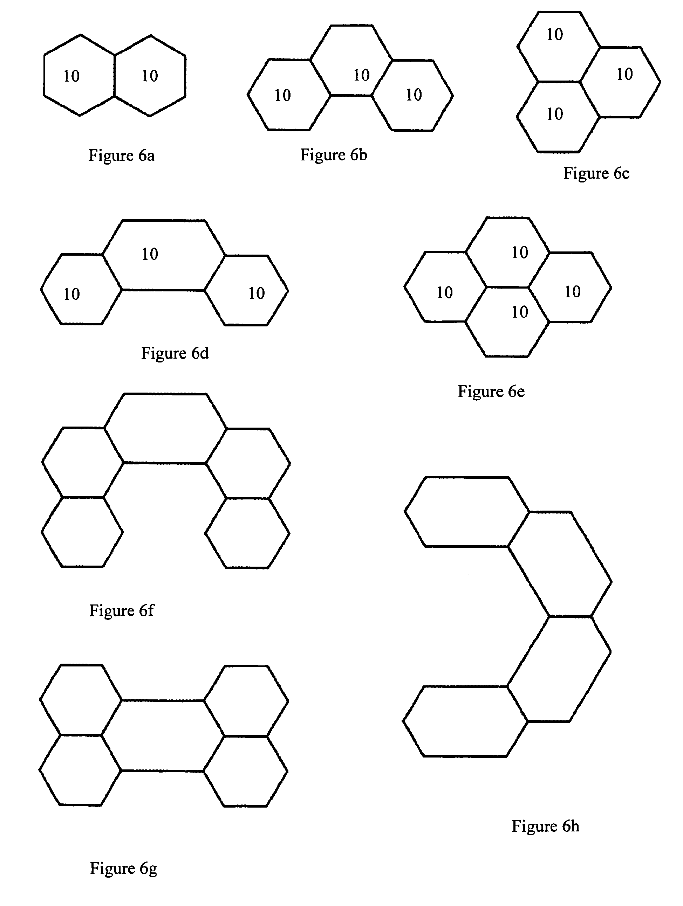

As illustrated in Figures 6A to 6H, more than one enclosure can be used together. The enclosures 10 may simply be placed to abut one another but more than one enclosure can also be connected together. For example, one or more post-members 12 can be used to attach not only a wall member defining one enclosure 10 but also to define part of a second (or more) enclosure. In this way, multiple enclosures can be formed together increasing the stability and functionality of all enclosures.

The enclosure of the present invention includes at least one elongate, substantially planar wall member 11. Each wall member 11 preferably has an end edge which is received into an edge channel 13 on a post member 12.

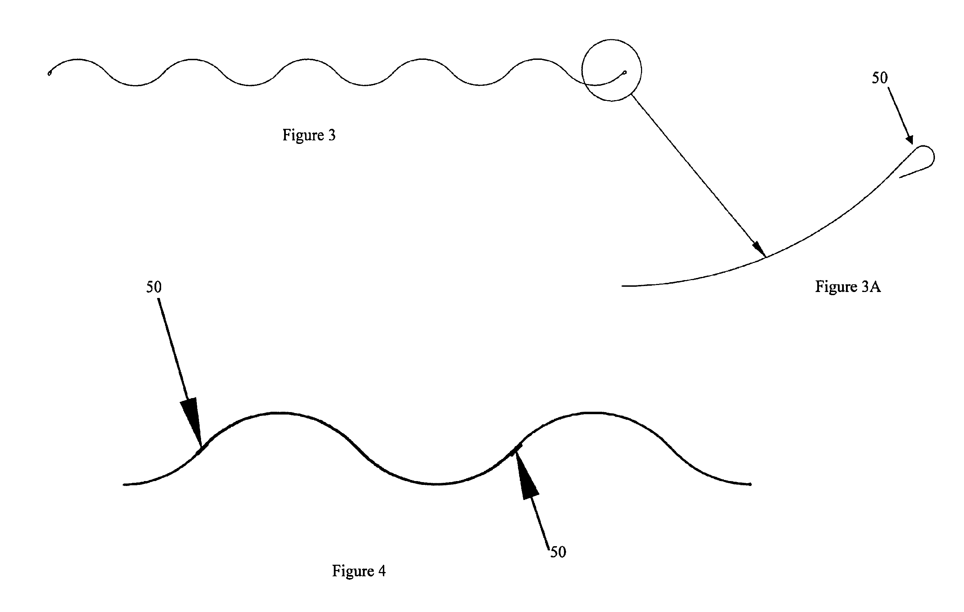

As illustrated particularly in Figure 3, the wall member 11 is a continuous panel member such as a steel sheet. The steel sheet is usually profiled or corrugated to provide strength and rigidity. The steel sheet can be treated to prevent corrosion and can be painted, profiled, and the like. Any profile may be used. Typically, the wall members will be either roll formed or extruded.

On an edge of the panel member where it is desired to attach an edge channel, there is provided a plurality of spaced apart projections. As mentioned above, this will typically be adjacent the end edges of the wall panel.

In the preferred form, these projections comprise lugs which can be punched out from the panel member.

It is preferred that projections 14 extend from each side of the wall member 11 as illustrated in Figure 1 such that the wall member 11 can lock to each side of the edge channel 14 which can provide a more secure locking action.

To improve the locking strength between the edge channel 13 and the wall member 11, it is preferred that the plurality of spaced apart projections 14 on the wall member are spaced somewhat from the edge of the panel member as illustrated in Figure 1. That is, the more metal there is between the projection and the edge of the panel member, the less will be the chance of the projections becoming torn away.

On the top and bottom edges of the wall member, a safety edge 50 may be provided, one preferred form of which is illustrated in Figure 3A. This safety edge 50 is formed by bending the edge of the wall member 11 over on itself to form a teardrop shaped edge which will preferably minimise injury.

The wall members 11 may be overlapped as illustrated in Figure 4.

It can clearly be seen that the wall member 11 can be slidingly engaged with the edge channel 13 and/or a snapfit engagement may be used.

The post member can be formed from any material, but a plastic, particularly an impact modified, UV stabilised plastic is preferred. A particularly preferred plastic is unplasticised polyvinylchloride (uPVC) also known as rigid PVC.

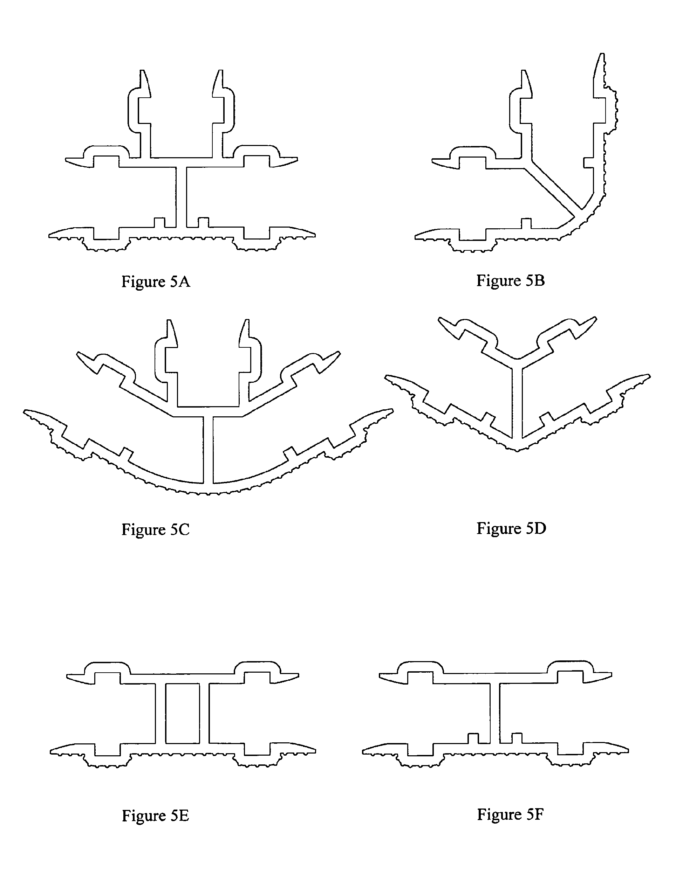

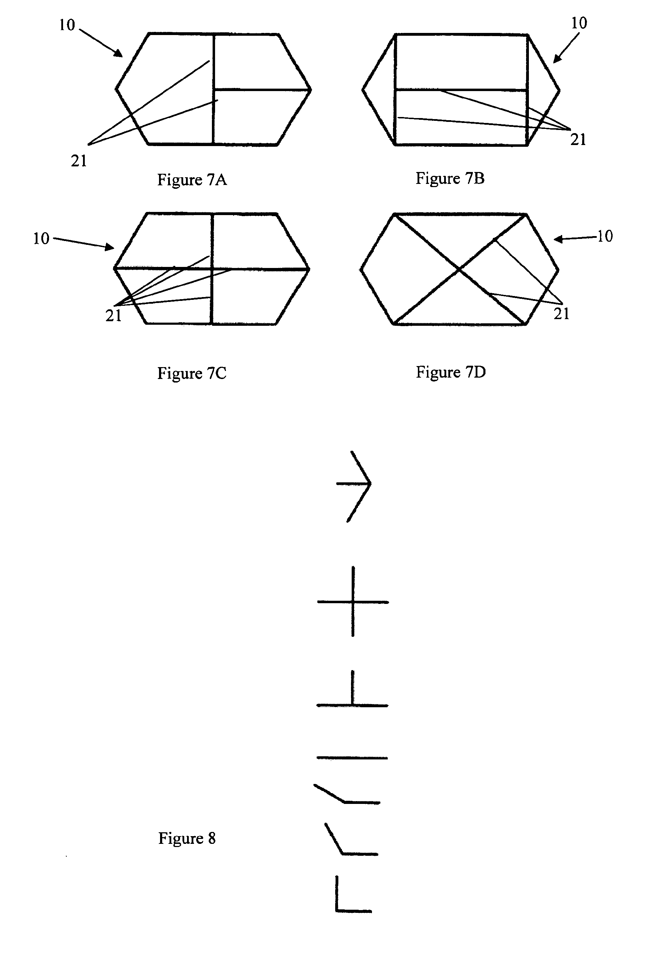

The edge channels 13 may be at any angle relative to one another with the angle between the edge channels 13 chosen in order to provide walls or partitions at particular angles relative to one another to form the enclosure. For example, a post 12 may be provided with two edge channels 90° apart (also illustrated in Figure 5B) three edge channels 13 approximately 60° apart (also illustrated in Figure 5C), four edge channels approximately 90° apart, three edge channels 90° apart (also illustrated in Figure 5A), two edge channels 180° apart (also illustrated in Figures 5E and 5F), two each channels 150° apart, two edge channels 120° apart (also illustrated in Figure 5D) or two edge channels at 90° apart as are illustrated in Figure 8.

A typical channel shape is one which is substantially U-shaped having a pair of spaced apart substantially parallel side flanges 15 and a connecting member 20 (this can be a bottom wall or top wall or edge wall depending on how the channel is used and there may be more than one as illustrated in Figure 5E).

The channel length, cross-section size and thickness can vary to suit and the channel can also be coloured, coated or otherwise treated to prevent corrosion (if metal) or provide a decorative appearance. The channel can be provided with drainage slots or apertures, if desired.

The free ends 16 of the side flanges 15 may be tapered in order to guide the wall member 11 thereinto.

The edge channel 13 has an abutment shoulder 17 against which the projections 14 on the panel member can lock.

According to the illustrated embodiment, each edge channel 13 has a receiving opening 18 on each flange 15 forming the edge channel 13 such that the projections 14 of the wall panel 11 can be at least partially received therein.

In the particular form illustrated in Figures 1 and 2, the receiving opening 18 is substantially U-shaped and extends perpendicularly to the plane of the wall member 11. In this configuration, one wall of the U-shaped receiving opening 18 forms the abutment shoulder 17. Movement of the wall panel 11 laterally into the channel 13 between the flanges 15 is possible with some small temporary deformation of either the protrusions 14 on the wall member 11 or the flanges 15 of the edge channel 13 required to allow the protrusions 14 to pass. Once the protrusions 14 are aligned with the receiving openings 18, the deformation ceases allowing the natural bias of the materials used to prevent removal of the protrusions 14 from the receiving openings 18 in a lateral direction.

The wall panel 11 can be removed from the post member 12 by sliding the wall panel 11 or the post 12 upwardly or downwardly relative to one another.

A stop member 19 is also be provided within the edge channel 13 in order to prevent insertion of the wall member 11 into the edge channel 13 too far.

In order to allow the edge channel and the panel member to push-lock together, it is preferred that the edge channel has a degree of resiliency to allow it to expand somewhat to accommodate the projections.

Alternatively, the projections can have a degree of resiliency and it is envisaged that in a further alternative both the edge channel and the panel member can be resilient to some extent.

During assembly, the wall member 11 can be inserted into the edge channel 13 in any direction, for example horizontally, vertically or at an angle thereto with one end of the post 12 engaging the wall member 11 initially and working towards the other end.

The enclosure of the present invention can also include one or more partitions 21 as illustrated in Figures 7A to 7D. In general, partitions 21 are simply wall members which extend within the enclosure 10 between one or more of the side walls and any other side wall or another point within the enclosure. The partitions illustrated, particularly in Figure 7C and 7D may be a single wall but preferably, a central post is provided to which the partition wall members are attached.

Typically, partitions and their location are defined by one or more posts. Any number of partitions and any configuration of partitions that may be useful can be created. Using different combinations of posts conform different shapes not only of the enclosure themselves, but also the partitions within enclosure.

Using the posts described above, it is clear that one or more partitioning walls can be provided within enclosure to divide the volume of the enclosure into different segregated areas. For example, a post may be provided with three edge channels approximately 60° apart, for each channels approximately 90° apart, three edge channels 90° apart, to edge channels 180° apart, to each channels 150° apart, to edge channels 120° apart or to edge channels at 90° apart. These allow partitioning wall members to be provided within the enclosure.

Summarizing, herein an enclosure is disclosed including at least one elongate, substantially planar wall member and at least one post member having at least one each channel, each at least one wall member having an edge which fits into at least one edge channel, the edge of the wall member having a plurality of spaced apart projections which extend from each side of the wall member, the edge channel having a pair of spaced apart, substantially parallel flanges between which the edge of a wall member is received and an abutment shoulder on at least one of the substantially parallel flanges in order to engage the projections on the wall member to allow passage thereof in a first direction but prevent passage in a second, opposite direction.

In the present specification and claims (if any), the word "comprising" and its derivatives including "comprises" and "comprise" include each of the stated integers but does not exclude the inclusion of one or more further integers.

Reference throughout this specification to "one embodiment" or "an embodiment" means that a particular feature, structure, or characteristic described in connection with the embodiment is included in at least one embodiment of the present invention. Thus, the appearance of the phrases "in one embodiment" or "in an embodiment" in various places throughout this specification are not necessarily all referring to the same embodiment. Furthermore, the particular features, structures, or characteristics may be combined in any suitable manner in one or more combinations.

In compliance with the statute, the invention has been described in language more or less specific to structural or methodical features. It is to be understood that the invention is not limited to specific features shown or described since the means herein described comprises preferred forms of putting the invention into effect. The invention is, therefore, claimed in any of its forms or modifications within the proper scope of the appended claims.

## Claims

1. A garden bed enclosure or a pet enclosure (10) including at least one elongate, substantially planar corrugated wall member (11) having a plurality of corrugations and a wall width, and at least one post member (12) having at least two edge channels (13), each at least one wall member (11) having an edge which fits into at least one edge channel (13), the edge of the wall member (11) having a plurality of projections (14) spaced apart over a height of the wall member and which extend laterally beyond the wall width, the edge channel (13) having a pair of spaced apart, substantially parallel flanges (15) between which the edge of a wall member (11) is received and an abutment shoulder (17) on at least one of the substantially parallel flanges (15) in order to engage the projections (14) on the wall member (11) to allow passage thereof in a first direction but prevent passage in a second, opposite direction.

2. An enclosure (10) as claimed in claim 1 wherein corrugations in the corrugated member extend substantially horizontally.

3. An enclosure (10) as claimed in any one of the preceding claims wherein each wall member (11) is generally rectangular with a pair of end edges and a top and bottom edge with, the end edges will be at least partially received into at least one edge channel (13) in the at least one post member (12).

4. An enclosure (10) as claimed in claim 3 wherein a safety edge (50) is provided to at least the top and bottom edges.

5. An enclosure (10) as claimed in any one of the preceding claims wherein the projections (14) comprise lugs which are punched out from the wall member.

6. An enclosure (10) as claimed in any one of the preceding claims wherein the projections (14) extend from each side of the wall member (11) being a panel member such that the panel member can lock to each side of the edge channel (13) to provide a more secure locking action.

7. An enclosure (10) as claimed in any one of the preceding claims wherein the projections (14) provide a snapfit engagement when assembled but can be disengaged by sliding the wall member (11) with the edge channel (13).

8. An enclosure (10) as claimed in any one of the preceding claims wherein the edge channel (13) is substantially U-shaped having a pair of spaced apart substantially parallel side flanges (15) and a connecting member (20) therebetween.

9. An enclosure (10) as claimed in claim 8 wherein each edge channel (13) has a receiving opening (18) on at least one side flange (15) to at least partially receive the projections (14) of the wall panel therein.

10. An enclosure (10) as claimed in claim 9 wherein movement of the wall panel laterally into the edge channel (13) between the side flanges (15) temporarily deforms the projections (14) on the wall member (11) and/or the side flanges (15) of the edge channel (13) to allow the projections (14) to pass and once the projections (14) are aligned with the receiving opening (18), the deformation ceases biasing the projections (14) into the receiving opening (18).

11. An enclosure (10) as claimed in any one of the preceding claims further including one or more partitions (21).

12. An enclosure (10) as claimed in claim 11 wherein each partition (21) is a wall member (11) extending within the enclosure (10) between one or more of the side walls and any other side wall or another point within the enclosure.

13. An enclosure (10) as claimed in either one of claims 11 or 12 wherein each partition (21) extends between two posts whether each post is used to form the enclosure or are within the enclosure.

14. An enclosure (10) as claimed in any one of the preceding claims wherein the height of at least one of the wall panels is greater than that of others.

15. An enclosure (10) as claimed in any one of the preceding claims wherein a plurality of enclosures are connected together utilising one or more post-members (12) to attach at least one wall member (11) as a part of one enclosure and also to define part of a further enclosure.

## Patentansprüche

1. Einfassung (10) für Gartenbeet oder Umzäunung für Haustier, umfassend
mindestens ein längliches, im Wesentlichen flächiges, gewelltes Wandelement (11) mit einer Mehrzahl von Wellungen und einer Wandbreite, und mindestens ein Pfostenelement (12) mit mindestens zwei Randkanälen (13), wobei das mindestens eine Wandelement (11) jeweils einen Rand aufweist, der in mindestens einen Randkanal (13) passt, wobei am Rand des Wandelements (11) eine Mehrzahl von Vorsprüngen (14) vorgesehen sind, die entlang einer Höhe des Wandelements beabstandet angeordnet sind und die sich seitlich über die Wandbreite hinaus erstrecken, wobei der Randkanal (13) zwei beabstandete, im Wesentlichen parallele Wangen (15) umfasst, zwischen denen der Rand eines Wandelements (11) aufgenommen wird, sowie eine Anschlagschulter (17) an mindestens einer der im Wesentlichen parallelen Wangen (15) zum In-Anlage-Kommen der an dem Wandelement (11) vorgesehenen Vorsprünge (14) in solcher Weise, dass ein Vorbeiführen desselben in einer ersten Richtung möglich ist aber ein Vorbeiführen in einer zweiten, entgegengesetzten Richtung verhindert wird.

2. Einfassung (10) nach Anspruch 1, wobei sich die Wellungen in dem gewellten Element im Wesentlichen horizontal erstrecken.

3. Einfassung (10) nach einem der vorhergehenden Ansprüche, wobei die Wandelemente (11) jeweils im Allgemeinen rechteckig sind und zwei Stirnränder sowie einen oberen und einen unteren Rand aufweisen, wobei die Stirnränder zumindest teilweise in mindestens einem Randkanal (13) in dem mindestens einen Pfostenelement (12) aufgenommen werden.

4. Einfassung (10) nach Anspruch 3, wobei zumindest an dem oberen und dem unteren Rand eine Sicherungskante (50) vorgesehen ist.

5. Einfassung (10) nach einem der vorhergehenden Ansprüche, wobei die Vorsprünge (14) Nasen umfassen, die aus dem Wandelement ausgestanzt sind.

6. Einfassung (10) nach einem der vorhergehenden Ansprüche, wobei sich die Vorsprünge (14) von beiden Seiten des Wandelements (11) aus erstrecken, das als ein Plattenelement ausgebildet ist, so dass das Plattenelement an beiden Seiten des Randkanals (13) verriegelt werden kann, um eine sicherere Arretierung bereitzustellen.

7. Einfassung (10) nach einem der vorhergehenden Ansprüche, wobei die Vorsprünge (14) im zusammengebauten Zustand für einen Verrastungseingriff sorgen, aber durch Verschieben des Wandelements (11) in Bezug auf den Randkanal (13) gelöst werden können.

8. Einfassung (10) nach einem der vorhergehenden Ansprüche, wobei der Randkanal (13) im Wesentlichen U-förmig ist, wobei er zwei beabstandete, im Wesentlichen parallele Seitenwangen (15) und zwischen diesen ein Verbindungselement (20) aufweist.

9. Einfassung (10) nach Anspruch 8, wobei jeder Randkanal (13) eine Aufnahmeöffnung (18) an mindestens einer Seitenwange (15) aufweist, um mindestens teilweise die Vorsprünge (14) der Wandplatte darin aufzunehmen.

10. Einfassung (10) nach Anspruch 9, wobei sich bei einer Bewegung der Wandplatte seitlich in den Randkanal (13) zwischen den Seitenwangen (15) hinein die Vorsprünge (14) an dem Wandelement (11) und/oder die Seitenwangen (15) des Randkanals (13) vorübergehend verformen, so dass die Vorsprünge (14) durchgelassen werden, und sobald die Vorsprünge (14) mit der Aufnahmeöffnung (18) ausgerichtet sind die Verformung aufgehoben wird, indem die Vorsprünge (14) in die Aufnahmeöffnung (18) hinein gedrückt werden.

11. Einfassung (10) nach einem der vorhergehenden Ansprüche, wobei diese ferner eine oder mehrere Abtrennungen (21) umfasst.

12. Einfassung (10) nach Anspruch 11, wobei jede Abtrennung (21) ein Wandelement (11) darstellt, das sich innerhalb der Einfassung (10) zwischen einer oder mehreren der Seitenwände und einer beliebigen weiteren Seitenwand oder einem anderen Punkt innerhalb der Einfassung erstreckt.

13. Einfassung (10) nach einem der Ansprüche 11 oder 12, wobei sich jede Abtrennung (21) zwischen zwei Pfosten erstreckt, unabhängig davon ob der jeweilige Pfosten verwendet wird, um die Einfassung zu bilden oder sich innerhalb der Einfassung befindet.

14. Einfassung (10) nach einem der vorhergehenden Ansprüche, wobei mindestens eines der Wandelemente eine größere Höhe aufweist als andere Wandelemente.

15. Einfassung (10) nach einem der vorhergehenden Ansprüche, wobei sich eine Mehrzahl von Einfassungen miteinander verbinden lassen, indem ein oder mehrere Pfostenelemente (12) verwendet werden, um mindestens ein Wandelement (11) als Teil einer Einfassung zu befestigen und außerdem einen Teil einer weiteren Einfassung zu bilden.

## Revendications

1. Enceinte de carré potager ou enceinte à animaux domestiques (10) comprenant au moins un élément de paroi ondulé allongé et substantiellement plan (11) ayant une pluralité d'ondulations et une largeur de paroi, et au moins un élément formant piquet (12) ayant au moins deux canaux de bord (13), chacun desdits au moins un élément de paroi (11) ayant un bord qui se loge dans au moins un canal de bord (13), le bord de l'élément de paroi (11) comportant une pluralité de protubérances (14) espacées sur une hauteur de l'élément de paroi et qui s'étendent latéralement au-delà de la largeur de paroi, le canal de bord (13) ayant une paire de brides espacées et substantiellement parallèles (15) entre lesquelles est reçu le bord d'un élément de paroi (11) et un épaulement d'appui (17) sur au moins l'une des brides substantiellement parallèles (15) afin d'engager les protubérances (14) sur l'élément de paroi (11) pour permettre le passage de celui-ci dans une première direction et empêcher le passage dans une deuxième direction, qui est opposée.

2. Enceinte (10) selon la revendication 1, dans laquelle les ondulations de l'élément ondulé s'étendent de façon substantiellement horizontale.

3. Enceinte (10) selon l'une quelconque des revendications précédentes, dans laquelle chaque élément de paroi (11) est généralement rectangulaire avec une paire de bords d'extrémité et un bord supérieur et un bord inférieur, les bords d'extrémité étant au moins en partie logés dans au moins un canal de bord (13) dans ledit au moins un élément formant piquet (12).

4. Enceinte (10) selon la revendication 3, dans laquelle un bord de sécurité (50) est placé au moins sur les bords supérieur et inférieur.

5. Enceinte (10) selon l'une quelconque des revendications précédentes, dans laquelle les protubérances (14) comprennent des oreilles qui sont embouties dans l'élément de paroi.

6. Enceinte (10) selon l'une quelconque des revendications précédentes, dans laquelle les protubérances (14) s'étendent depuis chaque côté de l'élément de paroi (11) qui est un élément de panneau de telle sorte que l'élément de panneau peut se bloquer sur chaque côté du canal de bord (13) pour fournir une action de blocage plus sûre.

7. Enceinte (10) selon l'une quelconque des revendications précédentes, dans laquelle les protubérances (14) fournissent un engagement par pression quand elles sont assemblées mais peuvent être dégagées en faisant coulisser l'élément de paroi (11) dans le canal de bord (13).

8. Enceinte (10) selon l'une quelconque des revendications précédentes, dans laquelle le canal de bord (13) est substantiellement en forme de U ayant une paire de brides latérales espacées et substantiellement parallèles (15) et un élément de connexion (20) entre elles.

9. Enceinte (10) selon la revendication 8, dans laquelle chaque canal de bord (13) comporte une ouverture de réception (18) sur au moins une bride latérale (15) destinée à recevoir au moins en partie les protubérances (14) du panneau de paroi.

10. Enceinte (10) selon la revendication 9, dans laquelle le mouvement latéral du panneau de paroi dans le canal de bord (13) entre les brides latérales (15) déforme temporairement les protubérances (14) sur l'élément de paroi (11) et/ou les brides latérales (15) du canal de bord (13) pour permettre aux protubérances (14) de passer et une fois que les protubérances (14) sont alignées avec l'ouverture de réception (18), la déformation cesse, ce qui pousse les protubérances (14) dans l'ouverture de réception (18).

11. Enceinte (10) selon l'une quelconque des revendications précédentes, comprenant en outre une ou plusieurs cloisons (21).

12. Enceinte (10) selon la revendication 11, dans laquelle chaque cloison (21) est un élément de paroi (11) qui s'étend dans l'enceinte (10) entre une ou plusieurs des parois latérales et n'importe quelle autre paroi latérale ou un autre point situé à l'intérieur de l'enceinte.

13. Enceinte (10) selon l'une quelconque des revendications 11 et 12, dans laquelle chaque cloison (21) s'étend entre deux piquets, que les piquets soient utilisés pour former l'enceinte ou qu'ils soient à l'intérieur de l'enceinte.

14. Enceinte (10) selon l'une quelconque des revendications précédentes, dans laquelle la hauteur d'au moins l'un des panneaux de paroi est supérieure à celle des autres.

15. Enceinte (10) selon l'une quelconque des revendications précédentes, dans laquelle une pluralité d'enceintes sont reliées entre elles en utilisant un ou plusieurs éléments formant piquets (12) pour attacher au moins un élément de paroi (11) comme partie d'une enceinte et aussi pour définir une partie d'une autre enceinte.
